# EUROPEAN PATENT SPECIFICATION

(11) **EP 0 287 190 B1**
(45) Date of publication and mention of the grant of the patent: **21.07.1993**
(21) Application number: 88300443.4
(22) Date of filing: 20.01.1988
(51) Int. Cl.: C08L 23/16, C08G 18/80, C09J 123/16

(54) **Adhesion promoters and adhesive compositions, bonding methods and bonded articles based thereon**
Klebrigmacher und Klebstoffzusammensetzungen, Verfahren zum Kleben und damit verklebte Gegenstände
Agents collants et compositions adhésives, procédés de collage et articles collés par ces compositions

(30) Priority: 26.03.1987 US 30124
(43) Date of publication of application: 19.10.1988
(73) Proprietor: LORD CORPORATION, Erie Pennsylvania 16514-0038 (US)
(72) Inventor: Auerbach, Robert A., Erie Pennsylvania 16509 (US); Watson, George W., Erie Pennsylvania 16507 (US)
(74) Representative: Dunlop, Brian Kenneth Charles

(56) References cited:
- US-A- 3 658 755
- US-A- 3 824 217
- US-A- 3 859 258

## Description

This invention relates to adhesive systems. More particularly, this invention relates to an adhesion promoter capable of bonding diverse elastomers to substrate materials, and to methods for making that promoter; to the use of that promoter in adhesive compositions; to methods of making those adhesive compositions; to bonding methods which employ those compositions; and to bonded articles produced by those bonding methods.

Adhesive compositions are used extensively in bonding natural and synthetic elastomers to themselves, and to other substrates to form laminates and bonded articles. The industrial need for adhesives with the capability to bond such materials is sufficiently great, and the difficulties of achieving such a capability are sufficiently complex, that commercial acceptance of prior art adhesives has frequently represented no more than selection of the least unsatisfactory product.

Quite often, these prior art products have proven useful only for bonding a few specific elastomers to a few specific substrates, and thus are sadly lacking in versatility. Moreover, while many of these products were adequate for use with the elastomers and manufacturing processes in prevailing use at the time of their development, they have become increasingly unsatisfactory as the varieties of new and different synthetic elastomers have multiplied; as the areas in which both natural and synthetic elastomers can be advantageously used have expanded; and as the conditions of use, including temperature, flexibility, load carrying, and environmental conditions, have become more severe.

Adhesive compositions which have been employed in the past have included admixtures of chlorinated rubber and at least one polyalkylene polyamine adhesion promoter; mixtures of halogenated ethylene-propylene copolymer and sulfur; mixtures of chlorosulfonated polyethylene, orthoalkoxy aryl diisocyanates and dinitrosobenzene; chlorinated rubber-expoxylated novolak-epoxy resin curing agent admixture; and mixtures including chlorine-containing polymers, polyisocyanates, epoxylated novolaks, gammamethacryloxypropylthimethoxysilane, and dinitrosobenzene.

BRADLEY et al., U.S. Patent No. 2,459,742, discloses that chlorinated rubber adhesive compositions containing at least one polyalkylene polyamine adhesion promoter can be employed for bonding natural rubber, polychloroprene, polybutadiene, butadiene-styrene copolymer, and butadiene-acrylonitrile copolymer elastomers to substrates such as metals, plastics, textiles and paper.

COLEMAN et al., U.S. Patent No. 3,258,388, discusses the incorporation of poly-C-nitroso aromatic compounds into conventional rubber-to-metal adhesives to improve bonding. The conventional adhesives into which these compounds may be incorporated include compositions containing thermo-setting condensation polymers; polymers and copolymers of polar, ethylenically unsaturated materials; halogenated rubbers; and polyisocyanates.

DeCREASE et al. U.S.Patent No. 3,282,883, discloses a class of adhesive compositions for bonding natural and synthetic rubbers, such as ethylene-propylene-nonconjugated diene terpolymers, neoprene, styrene-butadiene rubber, butyl rubber, halobutyl rubber, butadiene-acrylonitrile, halosulfonated polyethylene rubber, polyurethane rubber, and polyacrylate rubber. The rubbers may be bonded to themselves or to other substrates, such as metals. The adhesive compositions disclosed by DeCREASE et al. include chlorosulfonated polyethylene, orthoalkoxy aryl diisocyanates, and dinitrosobenzene.

BARKER, U.S. Patent No. 3,824,217, discloses combining an oxime compound with an excess of a polyisocyanate compound, so that all oxime groups are reacted with isocyanate. The resulting compound may be used in compositions for bonding rubbers to primed metal substrates.

MANINO, U.S. Patent No. 3,859,258, discloses employing the oxime-isocyanate reaction product of BARKER in a non-sulfur vulcanization system. The elastomers to which the NANINO vulcanization system may be applied can be bonded to various substrates, including metals, by curing the elastomer in situ on the substrate; priming of the substrate with a polyisocyanate is generally necessary.

WESTLEY, U.S. Patent No. 4,581,092, discloses a cold-vulcanizable adhesive system for bonding vulcanized rubbers. The system is of particular use in creating durable seams between rubber strips or sheets. The adhesive compositions disclosed in WESTLEY include butyl rubber, a polyisocyanate compound, and at least one of a nitroso compound and an oxime compound, with the oxime compound requiring the additional presence of an oxidizing agent.

GLADDING et al., Canadian Patent No. 729,596, discloses bonding elastomeric materials to substrates such as metals by utilizing a first adhesive layer of chlorosulfonated polyethylene; a second layer of cured rubber, such as polyisochloroprene, as an interlayer; and a third adhesive composition, including polyisocyanates and/or a polychlorinated natural rubber, to provide an interlayer of rubber-to-metal bond. This system is obviously rather cumbersome.

Russian Patent No. 717,085 discloses a compound for modifying adhesives based on butyl rubber, which may be used in bonding rubber to metal. The patent teaches that the compound may be produced by reacting quinone dioxime with a polyisocyanate compound, in such a proportion that the ratio of oxime groups to isocyanate groups ranges from just over 1:1 up to 2:1.

Experience with prior art adhesive systems in this field has revealed that, while they may be useful in bonding vulcanizable elastomers which have a low amount of residual olefinic unsaturation, they suffer from one or more drawbacks when used with more highly unsaturated elastomers; at relatively high cure temperatures; or in lengthy precure heat cycles. In many instances, reactive ingredients such as curing agents and accelerators can prematurely cure the elastomer prior to its contact with the metal substrate, causing mold fouling and, particularly at higher mold temperatures, premature curing of the adhesive. These problems become more severe as the degree of unsaturation of the elastomer increases.

Moreover, prior art systems almost universally require one or more of a dinitroso compound, an oxime compound, a polyisocyanate compound, and an oxidizing agent. The high toxicity of these ingredients poses serious handling and safety problems, and the dinitroso compounds, particularly dinitrosobenzene (DNB), exhibit fuming at relatively high cure temperatures which aggravates the problem of mold fouling. It is also impractical to incorporate an unsaturated film-forming agent into an adhesive compound which includes dinitroso compounds, or an oxime compound used in combination with an oxidizing agent, because these compounds will proceed to react with the unsaturation sites of the film-forming agent, rendering the adhesive composition unusable after a relatively short shelf life.

Thus, there remains a need for new adhesive compositions that are simple, safe, stable, and effective for bonding elastomers with a relatively high degree of unsaturation to themselves and to other substrates, especially at high vulcanization temperatures and in extended precure heat cycles.

From one aspect the invention consists in a heat activatable adhesive, comprising an ethylene-propylene-diene terpolymer having a residual olefinic unsaturation of greater than 2 mole percent and an adduct of an aromatic dioxime and a polyisocyanate, said adduct being formed by the process of reacting an aromatic dioxime compound and a polyisocyanate compound in proportion to each other such that the ratio of oxime groups to isocyanate groups is greater than 2:1.

From another aspect the invention consists in a method of bonding a rubber surface to a metal surface, comprising contacting at least one of said rubber surface and said metal surface with an adhesive comprising an ethylene-propylene-diene terpolymer with a degree of unsaturation of greater than two mole percent and an adduct of an aromatic dioxime and a polyisocyanate, said adduct being formed by the process of reacting an aromatic dioxime compound and a polyisocyanate compound in proportion to each other such that the ratio of oxime groups to isocyanate groups is greater than 2:1, contacting said rubber surface with said metal surface, such that said composition of matter is layered therebetween, and maintaining contact between said rubber surface and said metal surface under sufficient conditions of time, temperature and pressure to effect bonding therebetween.

It is preferred that the ratio of oxime groups to the isocyanate groups is 2.5:1. The method involves combining a polyisocyanate compound with a slurry of an aromatic dioxime compound in an inert organic solvent, such as toluene, trichloroethylene, and methylethylketone. Depending on the precise selection and concentration of reactants, the reaction may proceed at room temperature without a catalyst, or may require a catalyst, such as triethylenediamine, and may proceed at slightly elevated temperatures, such as up to about 70°C.

While a wide range of aromatic oxime compounds and polyisocyanate compounds may be used in the practice of the present invention, para-benzoquinone dioxime (QDO) and toluene diisocyanate (TDI), respectively, are preferred.

Ethylene-propylene-nonconjugated diene terpolymer (EPDM) with an unsaturation of at least four mole percent is most preferred with the diene monomer component preferably being 1,4-hexadiene; dicyclopentadiene; 5-ethylidene-2-norbornene; or 5-isopropylidene-2-norbornene. Such EPDM elastomers are common materials of commerce available from several suppliers under a variety of trade names, including Epsyn, from Copolymer Corporation; Nordel, from DuPont; Vistalon, from Exxon; and Royalene, from Uniroyal.

The adhesive composition is particularly noteworthy in that it does not require the presence of an oxidizing agent in order to be effective, and it is free from low-molecular weight, toxic compounds which are likely to be volatile at cure temperatures, thereby presenting a health hazard as well as causing mold fouling.

As has been mentioned above the present invention further encompasses methods for bonding rubber to metal using the above-described heat-activatable adhesive composition, as well as the bonded articles produced thereby. The methods involve coating the relevant surface of at least one of the substrates to be bonded with the adhesive composition, such as by dipping, spraying, or brushing, and bringing the surfaces into contact under sufficient conditions of time, temperature, and pressure to activate the adhesive composition and effect bonding. Depending on whether the rubber being bonded is cured or uncured, the time for bonding may range from about five minutes to one-hundred and twenty minutes, and the temperature may range from about 90°C to 200°C.

In accordance with the present invention, it has been discovered that compositions comprising at least one ethylene-propylene-nonconjugated diene terpolymer, and at least one adduct of an aromatic dioxime compound and a monomeric polyisocyanate compound having at least two reactive isocyanate groups, are unexpectedly effective in bonding vulcanizable elastomers, particularly elastomers having a relatively low degree of residual olefinic unsaturation, to themselves or to other solid structural substrates. If desired, conventional additives such as fillers, dies, pigments, and extenders, can be incorporated into the adhesive compositions of the present invention in amounts conventionally used for such additives, ranging generally from about 0 to 100 parts by weight of the adhesive composition.

In a preferred embodiment the EPDM terpolymer has a residual olefinic unsaturation of greater than four mole percent, and the degree of unsaturation may even substantially exceed five mole percent. Most of the terpolymers of ethylene, propylene, and a nonconjugated diene, known in the art as EPDM elastomers, can be employed in forming the novel adhesive compositions of the present invention. The types of EPDM elastomers currently available commercially differ principally with respect to the non-conjugated diene. The dienes most used commercially are 1,4-hexadiene, dicyclopentadiene, 5-ethylidene-2-norbornene, and 5-isopropylidene-2-norbornene. These elastomers are well known in the art and no detailed discussion of their properties or preparation is needed for an understanding of their use in accordance with the invention.

Any aromatic dioxime may be employed to produce the adducts of the invention, including, but not limited to, p-benzoquinone dioxime (QDO), napthhoquinone dioxime, toluquinone dioxime, diphenylquinone dioxime, and diquinoyl dioxime, with QDO being preferred.

Any suitable organic polyisocyanate can be employed which contains at least two, reactive isocyanate groups. Suitable isocyanates include, without limitation,; diisocyanates such as toluene diisocyanate (either the 2,4-or 2,6-isomer or a mixture of both) and benzene diisocyanate, as well as dimers and trimers of these diisocyanates; methylene/bis(4-phenylisocyanate) and the corresponding saturated compound methylene/bis(4-cyclohexylisocyanate); and higher polyisocyanates, including the polyisocyanate of hexamethylenediamine urea condensate and polymethylenepoly(phenylisocyanate). Toluene diisocyanate (TDI) is preferred.

The dioxime-isocyanate adduct is more particularly characterized by the presence of at least one, and preferably two or more, oxime functional groups and by the substantial absence of a reactive isocyanate group. This follows from the fact that, during formation of the adduct, all of the isocyanate groups of the isocyanate moiety are reacted with the oxime, which is accomplished by defining the molar ratio of the dioxime moiety to the polyisocyanate moiety in the reaction mix as greater than 2:1, with a ratio of about 2.5:1 being preferred. When the adduct is to be employed in the adhesive compositions of the present invention, the ratio of oxime groups to isocyanate groups in the reaction mix exceeds 2:1, with a ratio of about 2.5:1 being preferred.

Generally, the dioxime-isocyanate adduct will be present in the adhesive composition in an amount of from about 2 to about 50 parts by weight per 100 parts by weight of the terpolymer, and preferably in the range of from about 10 to about 40 parts by weight per 100 parts by weight of the terpolymer.

The dioxime-isocyanate adducts can be produced by adding the aromatic dioxime and polyisocyanate together in the presence of a reaction medium such as an inert organic liquid; toluene, trichloroethylene, or methyl ethyl ketone are preferred because of their ready commercial availability. This may be done, for example, by rapidly adding the isocyanate compound to a slurry of the aromatic dioxime in inert organic liquid. Alternatively, a slurry of the aromatic dioxime in inert organic liquid may be added slowly to a solution of the isocyanate compound in inert organic solvent. Typically, the solid reactants are present in the reaction mixture in an amount of from about 5-60% by weight, with a range of from about 10-20% by weight being most preferred.

In order to achieve complete reaction of the oxime groups of the dioxime with the isocyanate, an excess of aromatic dioxime is employed. The molar ratio of the dioxime reactant to the isocyanate reactant is greater than 2:1, and is preferably about 2.5:1. In this way, the essential stoichiometric proportion of oxime group to isocyanate is always obtained.

While not essential, a suitable catalyst, such as triethylenediamine, dibutyltin dilaurate, stannous octoate, or other catalysts may be employed in the reaction at a suitable concentration, such as approximately one percent.

The solid reaction product may be separated from the liquid reaction medium by any suitable means such as filtration; washed with a suitable inert organic solvent, such as toluene, trichloroethylene, or methyl ethyl ketone, to remove any unreacted polyisocyanate; and dried by conventional means, such as in a vacuum oven. It will be obvious to those skilled in the art that the reactants, reaction medium, reaction vessel, and washing liquid should be free from water, since the isocyanate group reacts with water.

Alternatively, a fine suspension of the reaction product may be produced by grinding the reaction mixture in a sand mill, Kady mill, ball mill, or other suitable grinding instrument. In this way, the solid adduct does not have to be isolated.

The reaction conditions will vary somewhat, as would be expected, depending upon the relative reactivity of the reactants, whether or not a catalyst is employed, the concentration of the reactants and catalyst, and so forth. With some reactants the reaction will proceed at room temperature and go to completion in a short time without a catalyst, whereas with other reactants it may be necessary to employ a catalyst and conduct the reaction at somewhat elevated temperatures, up to about 70°C., in order to complete the reaction in a convenient time period. Selection of the precise conditions for a reaction using a given set of reactants will not present difficulties to one of ordinary skill in the art.

Preferably, the composition will be compounded with an appropriate inert solvent or diluent to provide an adhesive lacquer. Toluene, trichloroethylene, or methyl ethyl ketone are preferred because of their availability. The lacquer will have a viscosity of from about 25 to about 5,000 centipoises, and preferably from about 50 to 250 centipoises, at a total solids content of from about 3 to about 90 percent, preferably of from about 3 to about 70 percent, and most preferably of from about 5 to 30 percent.

Any suitable anhydrous inert organic liquid may be employed as the reaction medium, solvent, or washing liquid. As previously stated, toluene, trichloroethylene, and methyl ethyl ketone are preferred because of their ready availability.

If desired, conventional additives such as are normally used in adhesive compositions, e.g., fillers, colorants, or extenders, can be included in the adhesive compositions of the present invention in amounts conventionally used for such additives. Optionally, the adhesive compositions of the invention can include from about 0.5 to about 200 percent by weight, per 100 parts by weight of terpolymer, of at least one halogenated compound such as chlorinated rubber or chlorosulfonated polyethylene.

The adhesive compositions are applied to substrate materials in any conventional manner, such as by dipping, spraying, brushing, and the like. Preferably, after being coated the substrate surfaces are allowed to dry before being brought together. After the surfaces have been pressed together with the adhesive layer between, the assembly is heated in accordance with conventional practices. The exact condition selected will depend upon the particular elastomer being bonded and on whether or not it is cured. If the rubber is uncured and curing is to be effected during bonding, the conditions will be dictated by the rubber composition and will generally be at a temperature of from about 140°C. to about 200°C., for from about five to about sixty minutes. If the rubber is already cured the bonding temperature may range from about 90°C. to about 180°C., for from about fifteen minutes to about one hundred and twenty minutes.

The pressure employed in contacting the substrate surfaces is not critical, and in general may be simply that amount of pressure necessary to keep the substrate surfaces in firm contact while bonding takes place. The pressures typically encountered in compression, transfer, or injection molding operations are quite suitable to the practice of the present invention, and a pressure of anywhere from 0 to 20.6 x 10⁶ Pa (3,000 psi) is acceptable.

The compositions of the present invention are characterized by an unexpected ability to provide exceptionally strong rubber-to-metal bonds without the necessity of first priming the metal surface; however, the use of conventional substrate primer compositions does enhance the strength of the adhesive bond. Thus, the compositions of this invention are effective as one-coat adhesive materials, particularly for elastomers such as EPDM, EPR (ethylene-propylene rubber), IIR (isobutylene-isopropylene rubber), NR (natural rubber), Cl-IIR (chlorobutyl rubber), SBR (styrene-butadiene rubber), and blends thereof; and, as two-coat adhesive materials when used with conventional substrate primers, with the preferred primer being Chemlok 205, manufactured by Lord Corporation.

A wide range of metal substrates may be used for rubber-to-metal bonding using the adhesive compositions of the present invention, including grit blasted steel, cold-rolled steel, aluminum, and zinc-phosphatized steel.

Besides providing excellent primary adhesion, the compositions of the present invention exhibit an exceptionally long shelf life, excellent resistance to sweeping during transfer-type molding operations, and outstanding stability at environmental conditions of use. The compositions are particularly noteworthy in that they do not require any oxidizing agent because they do not function through the formation of dinitrosobenzene, thereby eliminating the fuming and mold fouling problems caused by dinitrosobenzene or low-molecular weight free oxime compounds at curing temperatures.

The present invention may be more fully understood and appreciated by reference to the following examples, which are provided for purposes of illustration only. It is to be understood that the invention is not limited to the examples nor to the specific details therein enumerated. In the examples, amounts are parts by weight, unless otherwise specified.

The dioxime-polyisocyanate adducts of the present invention may be prepared as follows:

### EXAMPLE A - TDI/QDO ADDUCT

3,700 ml of methyl ethyl ketone (MEK) are charged to a 5 liter reactor. After distilling off 50 ml of the MEK, 368 grams (2.67 moles) of QDO are added. The admixture is heated to 75° C, and 232 grams (1.33 moles) of TDI are slowly added, over a one-half hour period. The reaction mixture is next heated at 75-80° C for about three hours, until the percent of NCO groups present in the reaction mix is equal to or less than 0.1. An equal volume, of about 3,700 ml, of toluene is added to this reaction mixture. The solid product which then precipitates is filtered and dried to yield 410 grams of a brown-green powder, for a yield of 68 percent.

### EXAMPLE B - TDI/QDO ADDUCT SLURRY

To a 5 liter reactor was charged 3,700 ml of methyl ethyl ketone (MEK) and 368 grams (2.67 moles) of QDO. Approximately 100 ml of MEK was removed by distillation, and 232 grams (1.33 moles) of TDI was then added in four equal portions over a period of 1.5-2.0 hours. The reaction mixture was then heated at 75-80° C for an additional hour, and the remaining isocyanate content (less than 0.1 percent) was measured by standard titration. The reaction mixture was removed and ground into a fine dispersion by a standard sand mill process. Solids totalled twenty percent.

The following examples relate to specific formulations of the adhesive compositions of the present invention, and further describe the effectiveness of those adhesive compositions when tested as shown. In the following examples, commercial butyl compounds A and B, which were the rubbers used to test the effectiveness of the adhesive compositions of the present invention, are proprietary, customer-supplied butyl rubber samples, whose precise compositions are not critical for purposes of the examples. The QDO/TDI adduct used in Examples C and D is the adduct prepared by either of the procedures given in Examples A and B.

### EXAMPLE C - ADHESIVE FORMULATION A TESTED WITH COMMERCIAL BUTYL COMPOUNDS A AND B

### Formulation A

| Dry Weight (parts per hundred) | Ingredient | Wet Weight |
|---|---|---|
| 52.0 | FEF Carbon Black | 52.0 |
| 11.6 | QDO/TDI adduct @ 20% in toluene | 58.0 |
| 36.4 | Epsyn 55 EPDM @ 16% in naphtha | 277.5 |
| | Naphtha/toluene 1:1 | 376.8 |
| 100.0 | | |

Fomulation A is prepared as follows: the solution of Epsyn 55 EPDM in naphtha-toluene blend is added to a fine dispersion of QDO-TDI adduct prepared by processing on a Kady mill, ball mill, or sand mill. This mixture is further dispersed by milling to a grind of approximately 2.54 x 10⁻⁵ to 5.08 x 10⁻⁵m (1-2 mil) on a grind gauge.

The following bonding results were obtained:

### Commercial Butyl Compound A

- Cure Conditions:: Precure heating 4 minutes @ 160°C (320°F) Cure 20 mins. @ 160°C (320°F) to zinc phosphatized substrate
- Test Method:: ASTM D-429A, 0.0254 meters/min (1-in./min.), room temperature

| Sample | Peak Stress at break, Pa x 10⁶ (psi) | % Rubber Retention * |
|---|---|---|
| 1 | 4.23 (614) | 98 |
| 2 | 4.75 (689) | 99 |
| 3 | 4.56 (661) | 100 |
| | Avg. 4.51 (654) | 99 |

| | | |
|---|---|---|
| * Percent rubber retention refers to the percent of the adhered substrate area which retains rubber after the bonded substrate assembly has been tested on an Instron test instrument. | | |

### Commercial Butyl Compound B

- Cure Conditions:: Precure heating 4 minutes @ 160°C (320°F) Cure 28 mins. @ 160°C (320°F) to zinc phosphatized substrate
- Test Method:: ASTM D-429A, 0.0254 meters/min (1-in./min.), room temperature

| Sample | Peak Stress at break, Pa x 10⁶ (psi) | % Rubber Retention * |
|---|---|---|
| 1 | 4.39 (637) | 95 |
| 2 | 4.11 (596) | 90 |
| 3 | 4.59 (666) | 95 |
| | Avg, 4.36 (6̅3̅3̅) | 9̅3̅ |

| | | |
|---|---|---|
| * Percent rubber retention refers to the percent of the adhered substrate area which retains rubber after the bonded substrate assembly has been tested on an Instron test instrument. | | |

### EXAMPLE D - ADHESIVE FORMULATION B TESTED WITH COMMERCIAL BUTYL COMPOUNDS A AND B

### Formulation B

| Dry Weight (parts per hundred) | Ingredient | Wet Weight |
|---|---|---|
| 45.0 | FEF Carbon Black | 45.0 |
| 10.0 | QDO/TDI adduct @ 20% in toluene | 50.0 |
| 13.5 | Hypalon (Registered Trade Mark) 40 @ 20% in toluene | 67.5 |
| 31.5 | Epsyn 55 EPDM | 196.9 |
| | Naphtha/toluene 1:1 | 363.0 |
| 100.0 | | |

Formulation B is prepared similarly to Formulation A in Example C, except that Formulation B includes, as an additional ingredient, a toluene solution of Hypalon (Registered Trade Mark) 40 (chlorosulfonated polyethylene).

Formulation B gives slightly inferior performance compared to Formulation A, but affords a harder, tougher film than Formulation A. The following bonding results were obtained:

### Commercial Butyl Compound A

- Cure Conditions:: Precure heating 4 minutes @ 160°C (320°F) Cure 20 mins. @ 320°F to zinc phosphatized substrate
- Test Method:: ASTM D-429A, 0.0254 meters/min (1-in./min.), room temperature

| Sample | Peak Stress at break, Pax 10⁶ (psi) | % Rubber Retention * |
|---|---|---|
| 1 | 4.57 (663) | 99 |
| 2 | 4.23 (614) | 85 |
| 3 | 4.43 (642) | 100 |
| | Avg. 4.41 (6̅4̅0̅) | 95 |

| | | |
|---|---|---|
| * Percent rubber retention refers to the percent of adhered substrate area retaining rubber after testing the bonded substrate assembly on an Instron test instrument. | | |

### Commercial Butyl Compound B

- Cure Conditions:: Precure heating 4 minutes @ 160°C (320°F) Cure 28 mins. @ 160°C (320°F) to zinc phosphatized substrate
- Test Method:: ASTM D-429A, 0.0254 meters/min (1-in./min.), room temperature

| Sample | Peak Stress at break, Pax 10⁶ (psi) | % Rubber Retention * |
|---|---|---|
| 1 | 2.81 (407) | 50 |
| 2 | 4.02 (583) | 85 |
| 3 | 3.19 (463) | 50 |
| | Avg. 3.34 (4̅8̅4̅) | 6̅2̅ |

| | | |
|---|---|---|
| * Percent rubber retention refers to the percent of adhered substrate area retaining rubber after testing the bonded substrate assembly on an Instron test instrument. | | |

## Claims

1. A heat activatable adhesive, comprising:
a) an ethylene-propylene-diene terpolymer having a residual olefinic unsaturation of greater than 2 mole percent; and,
b) an adduct of an aromatic dioxime and a polyisocyanate, said adduct being formed by the process of reacting an aromatic dioxime compound and a polyisocyanate compound in proportion to each other such that the ratio of oxime groups to isocyanate groups is greater than 2:1.

2. The adhesive as defined by Claim 1, wherein said terpolymer has a degree of unsaturation of at least four mole percent.

3. The adhesive as defined by Claim 1 or 2, further comprising essentially no oxidizing agent.

4. The adhesive as defined by any one of Claims 1 to 3, wherein said diene is selected from the group consisting of 1,4-hexadiene; dicyclopentadiene; 5-ethylidene-2-norbornene; and 5-isopropylidene-2-norbornene.

5. The adhesive as defined by any one of the preceding claims, wherein said ratio of oxime groups to isocyanate groups is 2.5:1.

6. A method of making a liquid adhesive composition, comprising mixing the adhesive as defined by any one of the preceding claims, with an inert organic liquid in proportions sufficient to produce a composition having a viscosity of between 0.025 (N)(sec)/M² and 5.0 (N)(sec)/M² (25 and 5,000 centipoises) and a total solids content of between about 3 and 90 percent.

7. A method of bonding a rubber surface to a metal surface, comprising:
a) contacting at least one of said rubber surface and said metal surface with an adhesive comprising an ethylene-propylene-diene terpolymer with a degree of unsaturation of greater than two mole percent and an adduct of an aromatic dioxime and a polyisocyanate, said adduct being formed by the process of reacting an aromatic dioxime compound and a polyisocyanate compound in proportion to each other such that the ratio of oxime groups to isocyanate groups is greater than 2:1;
b) contacting said rubber surface with said metal surface, such that said adhesive is layered therebetween; and,
c) maintaining contact between said rubber surface and said metal surface under sufficient conditions of time, temperature and pressure to effect bonding therebetween.

8. The method as defined in Claim 7, wherein the terpolymer has a degree of unsaturation of at least four mole percent and/or the ratio of oxime groups to isocyanate groups is 2.5:1.

## Patentansprüche

1. Durch Wärme aktivierbarer Klebstoff, bestehend aus:
a) einem Ethylen-Propylen-dien-Terpolymer mit einem restlichen olefinischen ungesättigten Anteil, der größer als 2 Mol-% ist und
b) einem Addukt eines aromatischen Dioxims und eines Polyisocyanats, wobei das Addukt durch Reaktion einer aromatischen Dioximverbindung und einer Polyisocyanatverbindung in einem solchen Mischungsverhältnis hergestellt ist, daß das Verhältnis der Oximgruppen zu den Isocyanatgruppen größer als 2:1 ist.

2. Klebstoff nach Anspruch 1, dadurch gekennzeichnet, daß der ungesättigte Anteil des Terpolymers wenigstens 4 Mol-% beträgt.

3. Klebstoff nach den Ansprüchen 1 oder 2, dadurch gekennzeichnet, daß er darüber hinaus im wesentlichen kein Oxidationsmittel enthält.

4. Klebstoff nach einem der Ansprüche 1 bis 3, dadurch gekennzeichnet, daß das Dien 1,4-Hexadien, Dicyclopentadien, 5-Ethyliden-2-Norbornen oder 5-Isopropyliden-2-Norbornen ist.

5. Klebstoff nach einem der vorhergehenden Ansprüche, dadurch gekennzeichnet, daß das Verhältnis der Oximgruppen zu den Isocyanatgruppen 2,5:1 ist.

6. Verfahren zur Herstellung eines flüssigen Klebstoffes, dadurch gekennzeichnet, daß ein Klebstoff gemäß einem der vorhergehenden Ansprüche mit einer inerten organischen Flüssigkeit in einem Mischungsverhältnis vermischt wird, das ausreicht, um eine Mischung zu erhalten, deren Viskosität zwischen 0,025 (N) (sec)/M² und 5,0 (N) (sec)/M² (25 und 5000 centipoises) liegt und deren Gesamtgehalt an festen Bestandteilen zwischen etwa 3 und 90 % liegt.

7. Verfahren zum Verkleben einer Kautschukoberfläche mit einer metallischen Oberfläche, dadurch gekennzeichnet, daß
a) auf wenigstens eine der zu verklebenden Oberflächen ein Klebstoff aufgebracht wird, der ein Ethylen-Propylen-dien-Terpolymer mit einem ungesättigten Anteil, der größer als 2 Mol-% ist und ein Addukt eines aromatischen Dioxims und eines Polyisocyanats enthält, wobei das Addukt in der Weise hergestellt wird, daß eine aromatische Dioximverbindung und eine Polyisocyanatverbindung in einem solchen Mischungsverhältnis zur Reaktion gebracht werden, daß das Verhältnis der Oximgruppen zu den Isocyanatgruppen größer als 2:1 ist,
b) die Kautschukoberfläche mit der metallischen Oberfläche so in Kontakt gebracht wird, daß der Klebstoff als Schicht zwischen diesen liegt und daß
c) der Kontakt zwischen der Kautschukoberfläche und der metallischen Oberfläche während einer ausreichenden Zeit, bei ausreichender Temperatur und unter ausreichendem Druck aufrechterhalten wird, um das Verkleben zu bewirken.

8. Verfahren nach Anspruch 7, dadurch gekennzeichnet, daß das Terpolymer einen ungesättigten Anteil von wenigstens 4 Mol-% aufweist und/oder das Verhältnis der Oximgruppen zu den Isocyanatgruppen 2,5:1 beträgt.

## Revendications

1. Adhésif activable par la chaleur, comprenant :
(a) un terpolymère éthylène - propylène - diène ayant une insaturation oléfinique résiduelle de plus de 2 pour cent en moles ; et
(b) un produit d'addition d'une dioxima aromatique et d'un polyisocyanate, ledit produit d'addition étant formé par le procédé consistant à faire réagir un composé de type dioxime aromatique et un composé de type polyisocyanate dans une proportion l'un par rapport à l'autre telle que le rapport des groupes oxime aux groupes isocyanate soit supérieur à 2:1.

2. Adhésif selon la revendication 1, dans lequel ledit terpolymère a un degré d'insaturation d'au moins quatre pour cent en moles.

3. Adhésif selon l'une des revendications 1 ou 2, ne comprenant en outre pratiquement pas d'agent oxydant.

4. Adhésif selon l'une quelconque des revendications 1 à 3, dans lequel ledit diène est choisi dans le groupe constitué par l'hexadiène-1,4 ; le dicyclopentadiène ; l'éthylidène-5 norbornène-2 ; et l'isopropylidène-5 norbornène-2.

5. Adhésif selon l'une quelconque des revendications précédentes, dans lequel ledit rapport des groupes oxime aux groupes isocyanate est de 2,5 : 1.

6. Procédé de fabrication d'une composition adhésive liquide, comprenant le mélange de l'adhésif tel que défini à l'une quelconque des revendications précédentes, avec un liquide organique inerte dans des proportions suffisantes pour produire une composition ayant une viscosité comprise entre 0,025 (N)(s)/M² et 5,0 (N)(s)/M² (25 et 5000 centi-poises) et une teneur totale en matières solides comprise entre environ 3 et 90 pour cent.

7. Procédé de collage d'une surface en caoutchouc à une surface métallique, comprenant :
(a) la mise en contact d'au moins l'une parmi ladite surface de caoutchouc et ladite surface métallique avec un adhésif comprenant un terpolymère éthylène - propylène - diène ayant un degré d'insaturation de plus de deux pour cent en moles et un produit d'addition d'une dioxime aromatique et d'un polyisocyanate, ledit produit d'addition étant formé par le procédé consistant à faire réagir un composé de type dioxime aromatique et un composé de type polyisocyanate dans une proportion l'un par rapport à l'autre telle que le rapport des groupes oxime aux groupes isocyanate soit supérieur à 2:1 ;
(b) la mise en contact de ladite surface de caoutchouc avec ladite surface métallique, de telle sorte que ledit adhésif forme une couche entre les deux ; et
(c) le maintien du contact entre ladite surface de caoutchouc et ladite surface métallique dans des conditions de temps, de température et de pression suffisantes pour effectuer un collage entre les deux.

8. Procédé selon la revendication 7, dans lequel le terpolymère a un degré d'insaturation d'au moins quatre pour cent en moles et/ou le rapport des groupes oxime aux groupes isocyanate est de 2,5:1.
